# EUROPEAN PATENT APPLICATION

(11) **EP 4 506 693 A1**
(43) Date of publication of application: **12.02.2025**
(21) Application number: 23780737.5
(22) Date of filing: 29.03.2023
(51) Int. Cl.: G01N 35/00, G01N 35/02

(54) **SAMPLE TREATMENT SYSTEM**

(30) Priority: 30.03.2022 JP 2022055891
(71) Applicant: Sekisui Medical Co., Ltd., Tokyo 103-0027 (JP)
(72) Inventor: OGASAWARA, Kosuke, Tokyo 103-0027 (JP); KAWABE, Toshiki, Tokyo 103-0027 (JP); IIJIMA, Yumi, Tokyo 103-0027 (JP)
(74) Representative: Maiwald GmbH
(86) International application number: PCT/JP2023/012905
(87) International publication number: WO 2023/190729

(57) **Abstract**

In the specimen processing system (10), reagent information regarding a reagent including position information of the reagent is stored for each of the reagents in the reagent information database (72). Then, based on the position information of the reagent included in the reagent information, the display control unit (90) causes a reagent information display screen (91) to be displayed on a touch display (82) of a terminal (14), the reagent information display screen (91) including a reagent recognition mark display region (91A) that displays a reagent recognition mark (92) corresponding to the reagent arranged in the reagent cooling storage (60) so as to correspond to an arrangement position of the reagent.

## Description

### Technical Field

The present disclosure relates to a specimen processing system.

### Background Art

Japanese Patent Application Laid-Open (JP-A) No. 2016-90536 describes an invention related to an automatic analyzer. In the automatic analyzer, a user operates an input unit to set an item to be measured at the time of calibration or a specimen to be measured at the time of accuracy control measurement. Then, in the automatic analyzer, measurement of a specimen necessary for calibration or accuracy control measurement is performed based on a setting input from the input unit.

### SUMMARY OF INVENTION

### Technical Problem

However, in the above-described prior art, since calibration or measurement of a specimen is automatically performed by the automatic analyzer after setting input by the user, the user cannot grasp information regarding a reagent to be calibrated or a reagent used for accuracy control measurement at the time of setting input.

In consideration of the above fact, an object of the disclosure is to provide a specimen processing system in which a user can grasp information regarding a reagent at the time of setting input regarding specimen processing by the user.

### Solution to Problem

A specimen processing system according to a first aspect includes a reagent arrangement unit in which a plurality of reagents used for analysis of a specimen is arranged, a reagent information storage unit that stores, for each of the reagents, reagent information regarding the reagent including position information of the reagent, and a display control unit that causes a display unit to display the reagent information, in which the display control unit causes the display unit to display a reagent information display screen including a reagent recognition mark display region that displays a reagent recognition mark corresponding to the reagent so as to correspond to an arrangement position of the reagent arranged in the reagent arrangement unit based on the position information, and causes, when at least one of the reagent recognition marks is selected on the reagent information display screen based on an operation input by a user, the reagent information of the reagent corresponding to the reagent recognition mark to be displayed on the reagent information display screen.

The specimen processing system according to the first aspect includes a reagent arrangement unit in which a plurality of reagents used for analysis of a specimen is arranged.

Meanwhile, a configuration is also conceivable in which, at the time of specimen processing, work related to specimen processing is performed by automatically operating various devices after various setting inputs are performed by a user.

However, with such a configuration, the user cannot grasp information regarding the reagent at the time of setting input. Thus, for example, in a case in which the effective period of the reagent has expired, it is conceivable that the user needs to perform setting input again after replacing the reagent, or the specimen processing is performed with the reagent whose effective period has expired.

Here, in the present aspect, reagent information regarding the reagent including position information of the reagent is stored in the reagent information storage unit for each reagent. Then, the display control unit causes the display unit to display a reagent information display screen including a reagent recognition mark display region that displays a reagent recognition mark corresponding to the reagent so as to correspond to the arrangement position of the reagent arranged in the reagent arrangement unit based on the position information of the reagent included in the reagent information.

The display control unit causes, when at least one of the reagent recognition marks is selected on the reagent information display screen based on the operation input by the user, the reagent information of the reagent corresponding to the reagent recognition mark to be displayed on the reagent information display screen.

Thus, in the present aspect, when the user selects a reagent to be used for specimen processing on the reagent information display screen, reagent information regarding the reagent is displayed on the reagent information display screen.

A specimen processing system according to a second aspect is the specimen processing system according to the first aspect, in which the reagent information storage unit stores calibration setting information regarding setting of calibration of the reagent, and the display control unit causes a calibration request button to be displayed on the reagent information display screen, and causes the display unit to display a calibration setting screen that displays the calibration setting information of the reagent corresponding to the reagent recognition mark when the calibration request button is selected based on the operation input in a state in which at least one of the reagent recognition marks is selected on the reagent information display screen based on the operation input.

In the specimen processing system according to the second aspect, when the user selects a reagent for calibration on the reagent information display screen and then selects the calibration request button, a calibration setting screen is displayed on the display unit, and the user can confirm the calibration setting information of the reagent.

A specimen processing system according to a third aspect is the specimen processing system according to the first aspect or the second aspect, in which the reagent information storage unit stores accuracy control measurement setting information regarding setting of accuracy control measurement of the reagent, and the display control unit causes an accuracy control measurement request button to be displayed on the reagent information display screen, and causes an accuracy control measurement setting screen to be displayed, that displays the accuracy control measurement setting information of the reagent corresponding to the reagent recognition mark when the accuracy control measurement request button is selected based on the operation input in a state in which at least one of the reagent recognition marks is selected on the reagent information display screen based on the operation input.

According to the specimen processing system according to the third aspect, when the user selects the reagent to be used for the accuracy control measurement on the reagent information display screen and then selects the accuracy control measurement request button, the accuracy control measurement setting screen is displayed on the display unit, and the user can confirm the accuracy control measurement setting information of the reagent.

### Advantageous Effects of Invention

As described above, the specimen processing system according to the disclosure has an excellent effect that a user can grasp information regarding a reagent at the time of setting input regarding specimen processing by the user.

### BRIEF DESCRIPTION OF DRAWINGS

Fig. 1 is a schematic view illustrating a configuration of a specimen processing system according to the present embodiment.
Fig. 2 is a plan view schematically illustrating a configuration of a specimen processing apparatus according to the present embodiment.
Fig. 3 is a plan view schematically illustrating a configuration of a reagent storage provided in the specimen processing apparatus according to the present embodiment.
Fig. 4 is a block diagram illustrating a hardware configuration of the specimen processing apparatus according to the present embodiment.
Fig. 5 is a block diagram illustrating a functional configuration of a control device mounted in the specimen processing apparatus according to the present embodiment.
Fig. 6 is a block diagram illustrating a hardware configuration of a terminal constituting a part of the specimen processing system according to the present embodiment.
Fig. 7 is a block diagram illustrating a functional configuration of the terminal constituting the part of the specimen processing system according to the present embodiment.
Fig. 8 is an image view illustrating a sample of a reagent information display screen displayed on the terminal constituting the part of the specimen processing system according to the present embodiment.
Fig. 9 is an image diagram illustrating a sample of a calibration setting screen displayed on the terminal constituting the part of the specimen processing system according to the present embodiment.
Fig. 10 is an image diagram illustrating a sample of an accuracy control measurement setting screen displayed on the terminal constituting the part of the specimen processing system according to the present embodiment.

### DESCRIPTION OF EMBODIMENTS

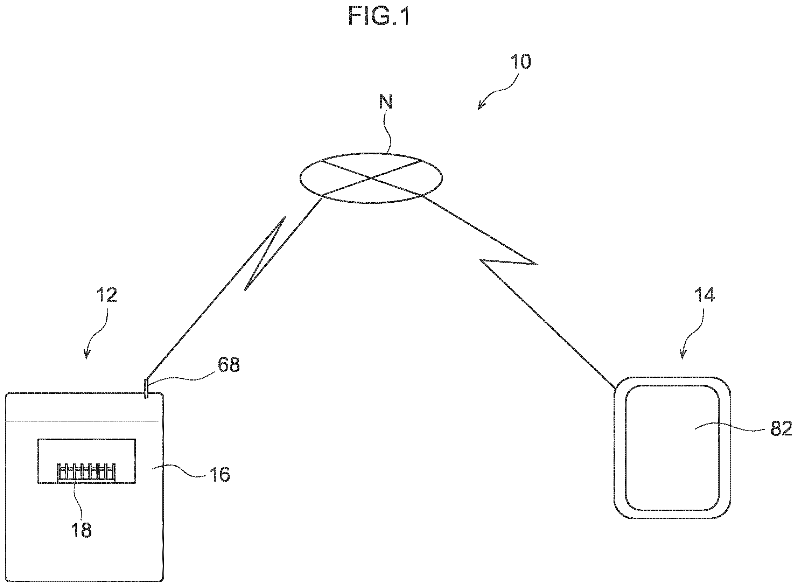

Hereinafter, an example of an embodiment of a specimen processing system according to the disclosure will be described with reference to Figs. 1 to 10. As illustrated in Fig. 1, a specimen processing system 10 according to the present embodiment includes a specimen processing apparatus 12, a terminal 14 used by a user, and a network N that communicably connects these components.

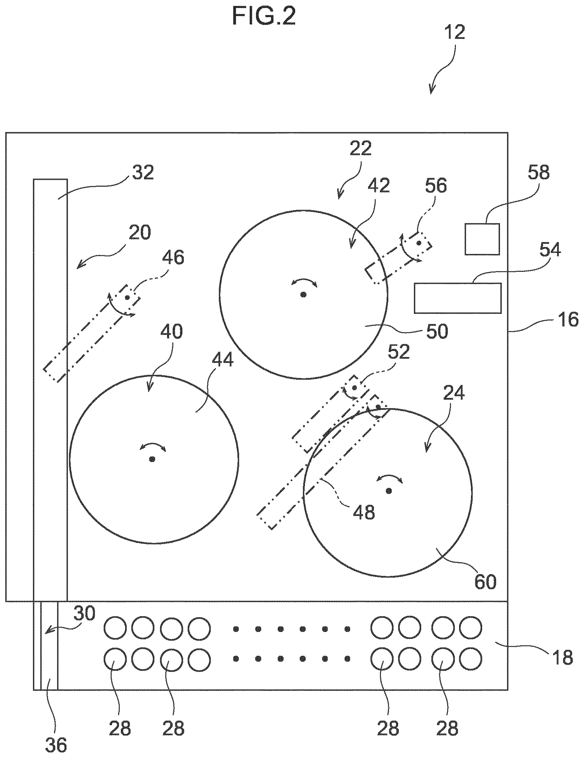

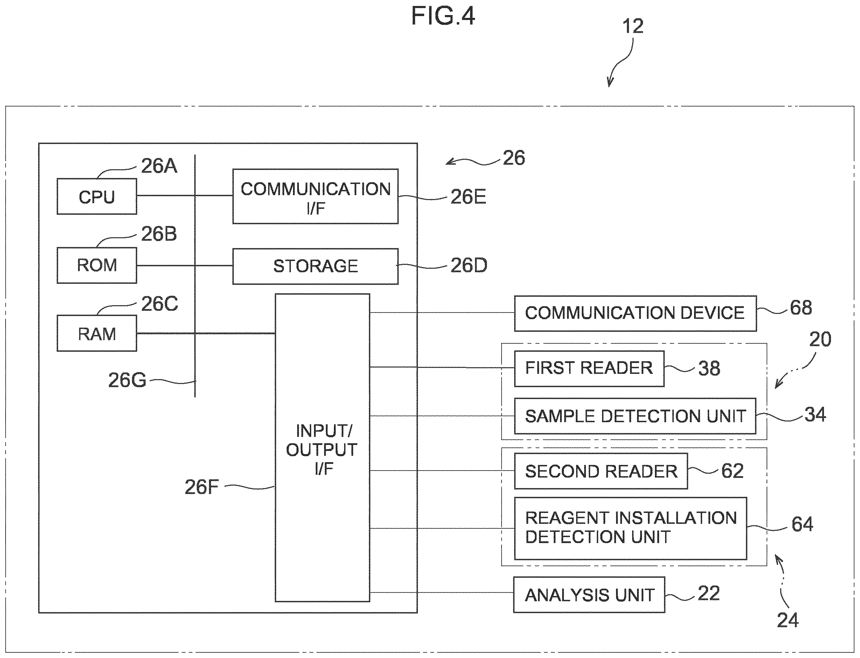

As also illustrated in Figs. 2 and 4, the specimen processing apparatus 12 includes a housing unit 16 constituting an outer shell thereof, a sample installation unit 18, a conveyance device 20, an analysis unit 22, a reagent management device 24 used to manage a reagent, and a control device 26 used to control various devices in the specimen processing apparatus 12.

The sample installation unit 18 is provided on the front side of the housing unit 16, and the sample installation unit 18 stores a plurality of specimen containers 28 in which various specimens such as blood and urine and a predetermined sample are put. A seal (not illustrated) on which an identifier such as a barcode or a QR code (registered trademark) indicating various types of information regarding the specimen injected into the specimen container 28 is printed is attached to the specimen container 28.

The conveyance device 20 includes a sampler unit 30, a conveyance rail 32, and a sample detection unit 34. The sampler unit 30 is movable along a moving rail (not illustrated) provided in the housing unit 16, and includes a gripping unit 36 capable of gripping the specimen container 28 and a first reader 38 capable of reading an identifier of the specimen container 28.

The sampler unit 30 can convey a predetermined specimen container 28 to the conveyance rail 32 in a state of being gripped by the gripping unit 36 based on an instruction signal transmitted from the control device 26. Upon receiving the instruction signal from the sample detection unit 34, the sampler unit 30 moves to a predetermined position of the specimen container 28, and transmits information regarding the sample in the specimen container 28 obtained from the identifier of the specimen container 28 to the control device 26 via the first reader 38.

The conveyance rail 32 conveys the specimen container 28 to a predetermined position in the specimen processing apparatus 12 based on an instruction signal transmitted from the control device 26. When a specimen of an amount necessary for measurement is collected from the specimen container 28, the specimen container 28 is returned to a predetermined position of the sample installation unit 18 by the sampler unit 30 and the conveyance rail 32.

The sample detection unit 34 is provided in the sample installation unit 18, and includes a weight sensor, a contact sensor, and the like. When the specimen container 28 is newly stored in the sample installation unit 18, the sample detection unit 34 detects the specimen container 28 by the sensor, and transmits a command signal including position information of the specimen container 28 to the sampler unit 30.

The sampler unit 30 that has received the command signal from the sample detection unit 34 moves to the position of the newly stored specimen container 28, and transmits information regarding the specimen in the specimen container 28 and position information of the specimen container 28 to the control device 26.

The analysis unit 22 includes a colorimetric measurement unit 40 and a coagulation measurement unit 42. Specifically, the colorimetric measurement unit 40 includes a colorimetric reaction table 44 having a circular shape in plan view and provided with a plurality of colorimetric measurement ports (not illustrated), and the colorimetric reaction table 44 is rotatable clockwise and counterclockwise by an actuator (not illustrated) that operates based on an instruction signal transmitted from the control device 26.

Then, in each colorimetric measurement port of the colorimetric reaction table 44, a reaction container, for example, a cuvette is stored, and a specimen is injected from the specimen container 28 conveyed by the conveyance device 20 into the reaction container via the dispensing device 46, and a reagent stored in a reagent cooling storage 60 as a reagent arrangement unit to be described later is injected into the reaction container via the dispensing device 48.

The colorimetric measurement unit 40 irradiates the reaction container into which the specimen and the reagent are injected with light of a specific wavelength to measure a color tone change of the mixed liquid of the specimen and the reagent, for example, absorbance, and calculates an activity value or the like of a substance to be measured from the absorbance after a predetermined time or the amount of change in absorbance within a predetermined time.

The coagulation measurement unit 42 includes a coagulation reaction table 50 having a circular shape in plan view, and a plurality of coagulation measurement ports (not illustrated) is provided in the coagulation reaction table 50. The coagulation reaction table 50 is rotatable clockwise and counterclockwise by an actuator (not illustrated) that operates based on an instruction signal transmitted from the control device 26.

A reaction container is housed in each coagulation measurement port of the coagulation reaction table 50, and a specimen is injected into the reaction container from the specimen container 28 conveyed by the conveyance device 20 via the dispensing device 46, and a reagent stored in the reagent cooling storage 60 is injected into the reaction container via the dispensing device 52. The reaction container supplied from a reaction container supply unit 54 is supplied to each coagulation measurement port of the coagulation reaction table 50 via a reaction container transfer device 56. The used reaction container is recovered from the coagulation reaction table 50 by the reaction container transfer device 56 and discarded in the reaction container discard section 58.

The coagulation measurement unit 42 irradiates the reaction container into which the specimen and the reagent are injected with light, and detects a coagulation reaction or the like of the substance to be measured from a process of intensity change of scattered light.

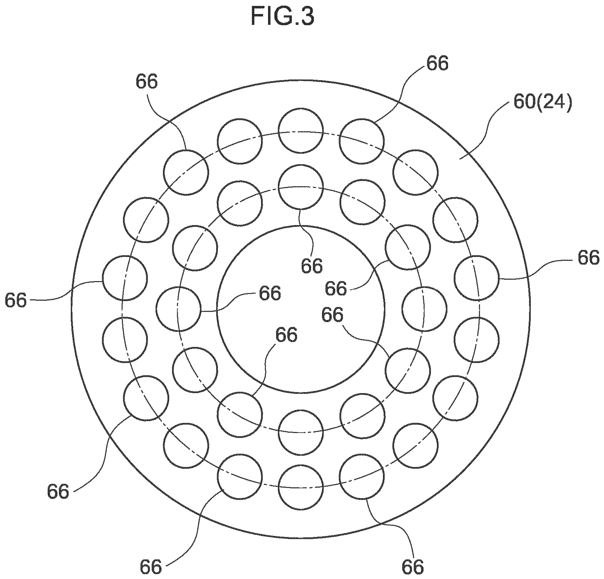

The reagent management device 24 includes the reagent cooling storage 60, a second reader 62, and a reagent installation detection unit 64. As also illustrated in Fig. 3, the reagent cooling storage 60 has a circular shape in plan view, and can cool a plurality of reagent containers 66 into which reagents used for various analyses of the specimen are injected. The reagent cooling storage 60 is rotatable clockwise and counterclockwise by an actuator (not illustrated) that operates based on an instruction signal transmitted from the control device 26.

A seal (not illustrated) on which an identifier such as a barcode or a QR code indicating various types of information regarding the reagent injected into the reagent container 66 is printed is attached to the reagent container 66.

The information regarding the reagent indicated by the identifier includes, for example, the name of the reagent, the lot number of the reagent, the serial number of the reagent, the type of the reagent, a measurement item in which the reagent is used, the type of the reagent container, the expiration date of the reagent, the volume of the reagent container, the number of analyzable times, and an ISI value of the reagent.

The second reader 62 can acquire information regarding the reagent in the reagent container 66 by reading the identifier of the seal attached to the reagent container 66. The second reader 62 can transmit and receive various types of information to and from the control device 26, and can transmit information regarding the reagent in the reagent container 66 to the control device 26.

The reagent installation detection unit 64 is provided in the reagent cooling storage 60, and includes a weight sensor, a contact sensor, and the like. When the reagent container 66 is newly stored in the reagent cooling storage 60, the reagent installation detection unit 64 detects the reagent container 66 by the sensor, and transmits the position information of the reagent container 66 to the control device 26.

The control device 26 stores the information regarding the reagent in the reagent container 66 transmitted from the second reader 62 and the position information of the reagent container 66 transmitted from the reagent installation detection unit 64 in association with each other.

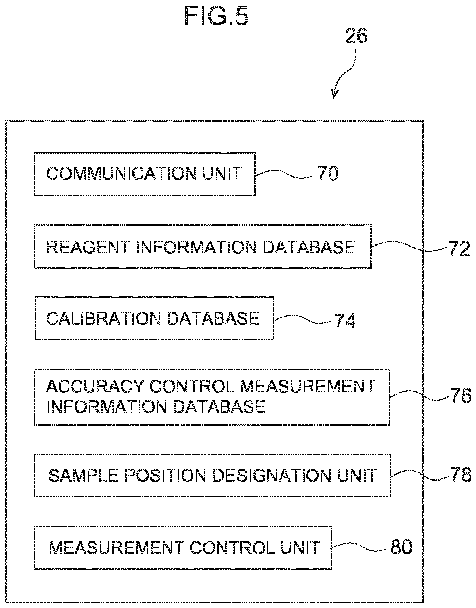

Next, a configuration of the control device 26 will be described with reference to Figs. 4 and 5. The control device 26 includes a CPU 26A which is an example of a processor, that is, a Central Processing Unit, a ROM 26B, that is, a Read Only Memory, a RAM 26C, that is, a Random Access Memory, a storage 26D, and a communication I/F 26E, that is, an Inter Face and an input/output I/F 26F. The CPU 26A, the ROM 26B, the RAM 26C, the storage 26D, the communication I/F 26E, and the input/output I/F 26F are communicably connected to each other via a bus 26G.

The CPU 26A is a central processing unit, and can execute various programs related to various controls of the specimen processing apparatus 12. Specifically, the CPU 26A can read a program from the ROM 26B and execute the program using the RAM 26C as a work area. Then, an execution program stored in the ROM 26B is read and executed by the CPU 26A, whereby the control device 26 can exhibit various functions as described later.

The storage 26D includes an HDD, that is, a hard disk drive or an SSD, that is, a solid state drive, and stores various programs including an operating system and various data. The storage 26D can store various types of information and the like regarding the specimen and the reagent.

The communication I/F 26E is an interface used for connection between the control device 26 and the network N, and the communication I/F 26E can communicate with the terminal 14 and the like via the communication device 68 including various antennas and the like connected to the input/output I/F 26F and the network N. For the interface, for example, a communication standard such as Wi-Fi (registered trademark) is used.

The input/output I/F 26F is an interface for the control device 26 to communicate with each device mounted on the specimen processing apparatus 12. The control device 26 is communicably connected to the conveyance device 20, the analysis unit 22, and the reagent management device 24 via the input/output I/F 26F. These devices may be directly connected to the bus 26G.

Next, a functional configuration of the control device 26 will be described. The control device 26 functions as an assembly of a communication unit 70, a reagent information database 72 as a reagent information storage unit, a calibration database 74 as a reagent information storage unit, an accuracy control measurement information database 76 as a reagent information storage unit, a sample position designation unit 78, and a measurement control unit 80 by the CPU 26A reading the execution program stored in the ROM 26B and executing the read execution program.

As will be described later, the communication unit 70 can transmit and receive various types of information to and from the terminal 14 via the network N.

The reagent information database 72 is a database that stores reagent information regarding each reagent used in the specimen processing system 10. As an example, the reagent information database 72 stores information regarding the reagent in the reagent container 66 read from the identifier of the reagent container by the second reader 62, the storage 26D, that is, detailed information of the reagent regarding each reagent used in the specimen processing system 10 stored in advance in the specimen processing system 10, and the position information of the reagent container 66 transmitted from the reagent installation detection unit 64 in association with each other.

The calibration database 74 is a database storing information regarding calibration, that is, calibration curve creation, corresponding to each reagent used in the specimen processing system 10. Specifically, in each reagent used in the specimen processing system 10, the calibration database 74 stores a measurement item in which a reagent is used and information regarding a standard sample of a known concentration necessary for calibration of the measurement item, a so-called calibrator, in association with each other.

The calibration database 74 also stores calibration curves generated by calibration of each reagent. Examples of the information regarding the calibrator include a sample name of the calibrator, a sample lot, and a type of a reagent container.

The accuracy control measurement information database 76 is a database that stores information regarding accuracy control measurement corresponding to each reagent used in the specimen processing system 10. The accuracy control measurement means measurement for evaluating reliability of the specimen processing apparatus 12 in measurement of a specimen. In the accuracy control measurement, if an accuracy control measurement result of an accuracy control measurement sample that can be regarded as having the same concentration of a measurement target substance in the same lot, that is, the so-called control sample falls within an allowable range before and after the measurement of the specimen, it is regarded that the reliability of the specimen processing apparatus 12 is ensured.

Specifically, the accuracy control measurement information database 76 stores, for each reagent used in the specimen processing system 10, a measurement item in which the reagent is used, information regarding a control sample used for accuracy control measurement of the reagent, and a measurement result of the accuracy control measurement. Examples of the information regarding the control sample include a sample name and a sample lot of the control sample.

It is also possible to set, as a function of the control device 26, an integrated database in which a part or all of the information stored in the reagent information database 72, a part or all of the information stored in the calibration database 74, and a part or all of the information stored in the accuracy control measurement information database 76 are integrated and operated.

As will be described later, the sample position designation unit 78 selects a calibrator and a control sample corresponding to the reagent designated by the terminal 14 based on the data of the calibration database 74 and the accuracy control measurement information database 76. Then, based on the state of the sample installation unit 18 obtained from the sample detection unit 34, the specified position information for storing the calibrator and the control sample in the sample installation unit 18 is transmitted to the terminal 14.

The measurement control unit 80 performs arithmetic processing on detection results of the colorimetric measurement unit 40 and the coagulation measurement unit 42 based on the calibration curve or the like stored in the calibration database 74, calculates the concentration or reaction time of the substance to be analyzed in the specimen, and stores the results.

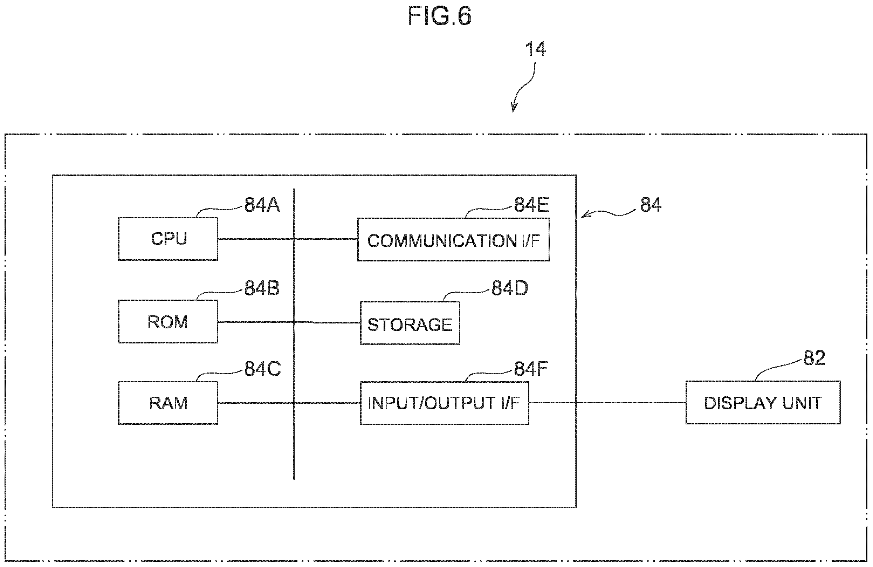

As illustrated in Fig. 6, the terminal 14 includes, as an example, a touch display 82 as a display unit capable of displaying various information to the user and detecting an operation input by the user, and a control device 84. The terminal 14 can communicate with the specimen processing apparatus 12 and the like via the network N. Various devices such as a tablet can be employed as the terminal 14.

The control device 84 includes a CPU 84A, a ROM 84B, a RAM 84C, a storage 84D, a communication I/F 84E, and an input/output I/F 84F. The CPU 84A, the ROM 84B, the RAM 84C, the storage 84D, the communication I/F 84E, and the input/output I/F 84F are communicably connected to each other via a bus 84G. The CPU 84A, the ROM 84B, the RAM 84C, the storage 84D, the communication I/F 84E, and the input/output I/F 84F basically have functions similar to those of the control device 26 described above.

In the present embodiment, various execution programs stored in the ROM 84B are read and executed by the CPU 84A, whereby various information can be displayed on the touch display 82 based on various reagents, data related to various specimens, and the like acquired from the specimen processing apparatus 12 and stored in the storage 84D. The touch display 82 is connected to the control device 84 via the input/output I/F 84F so as to be able to communicate with each other.

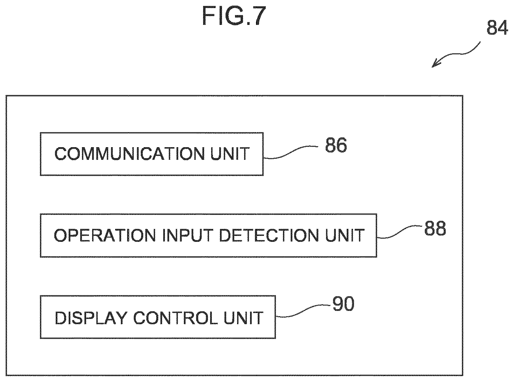

Specifically, as illustrated in Fig. 7, the control device 84 functions as an assembly of the communication unit 86, the operation input detection unit 88, and the display control unit 90 by the CPU 84A reading the execution program stored in the ROM 84B and executing the read execution program.

The communication unit 86 can transmit and receive various types of information to and from the control device 26 via the network N. Specifically, the communication unit 86 can acquire various data from the reagent information database 72, the calibration database 74, and the accuracy control measurement information database 76.

The operation input detection unit 88 detects an input made by the user to the touch display 82 and transmits the input to the display control unit 90.

The display control unit 90 displays various screens and buttons related to the operation of the specimen processing apparatus 12 on the touch display 82, and reflects the user's input to the touch display 82 on the screens and buttons. The display control unit 90 displays information obtained from the reagent information database 72, the calibration database 74, and the accuracy control measurement information database 76 via the communication unit 86 on the touch display 82.

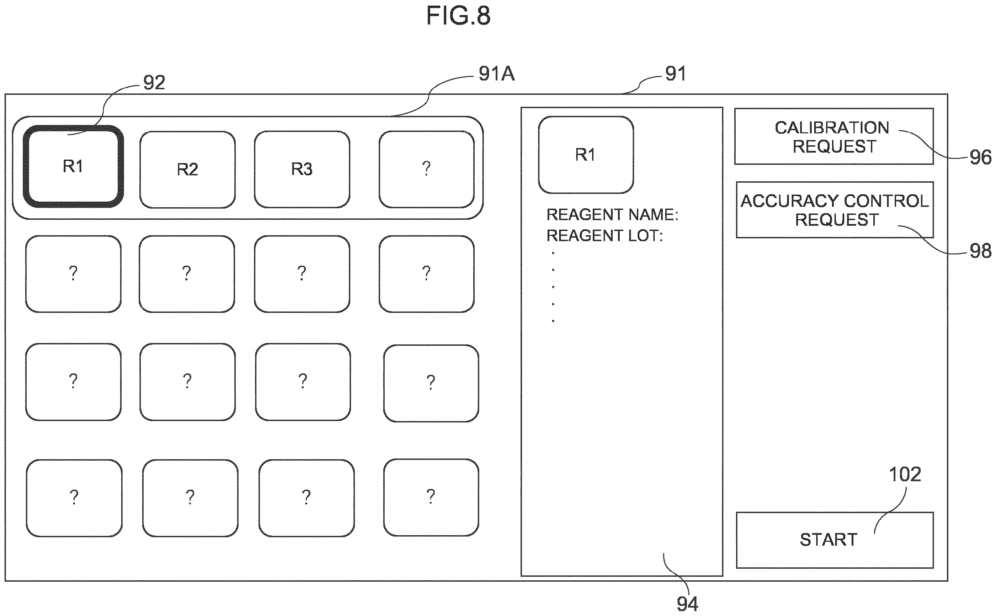

Specifically, when the user makes an input to a reagent storage tab (not illustrated) displayed on the touch display 82, a reagent information display screen 91 is displayed on the touch display 82 as illustrated in Fig. 8.

The reagent information display screen 91 includes a reagent recognition mark display region 91A, and in the reagent recognition mark display region 91A, a reagent recognition mark 92 corresponding to a reagent is displayed so as to correspond to an arrangement position of the reagent in the reagent cooling storage 60 in each reagent stored in the reagent cooling storage 60. In the reagent recognition mark display region 91A, as an example, at a portion where the reagent is not disposed in the reagent cooling storage 60 or a position of the reagent where the second reader 62 has not been able to acquire the information regarding the reagent, a ? mark is displayed.

When the user makes an input to the reagent recognition mark 92 on the reagent information display screen 91, a reagent information display screen 94 for displaying reagent information of the reagent corresponding to the reagent recognition mark 92 is displayed on the reagent information display screen 91.

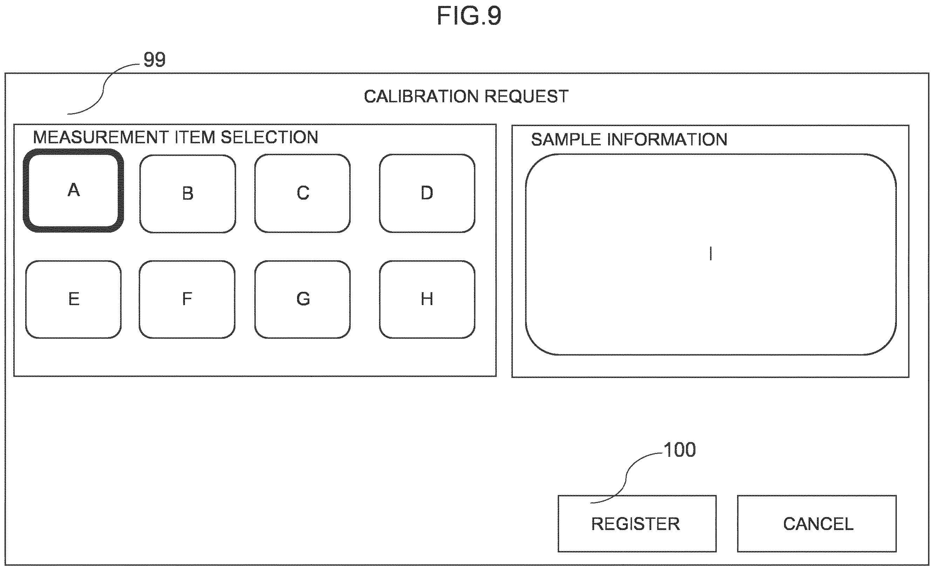

A calibration request button 96 and an accuracy control measurement request button 98 are displayed on the reagent information display screen 91. Then, when the user makes an input to the calibration request button 96 in a state where the reagent recognition mark 92 is selected, that is, in a state where the reagent recognition mark 92 is highlighted, a calibration setting screen 99 related to calibration of the reagent corresponding to the reagent recognition mark 92 is displayed on the reagent information display screen 91 as illustrated in Fig. 9.

On the calibration setting screen 99, the measurement item of the specimen in which the reagent corresponding to the reagent recognition mark 92 is used is highlighted, and information regarding the calibrator necessary for calibration of the measurement item is automatically displayed.

Specifically, the calibration setting screen 99 includes, as the information regarding the calibrator, the position where the calibrator is disposed in the coagulation reaction table 50, the sample name of the calibrator, the sample lot of the calibrator, and the type of the container of the calibrator.

Then, the user disposes the calibrator at a predetermined position designated on the calibration setting screen 99, and when the user makes an input to a registration button 100, the calibration setting screen 99 is closed. In this state, when the user makes an input to a start button 102, the calibration is started.

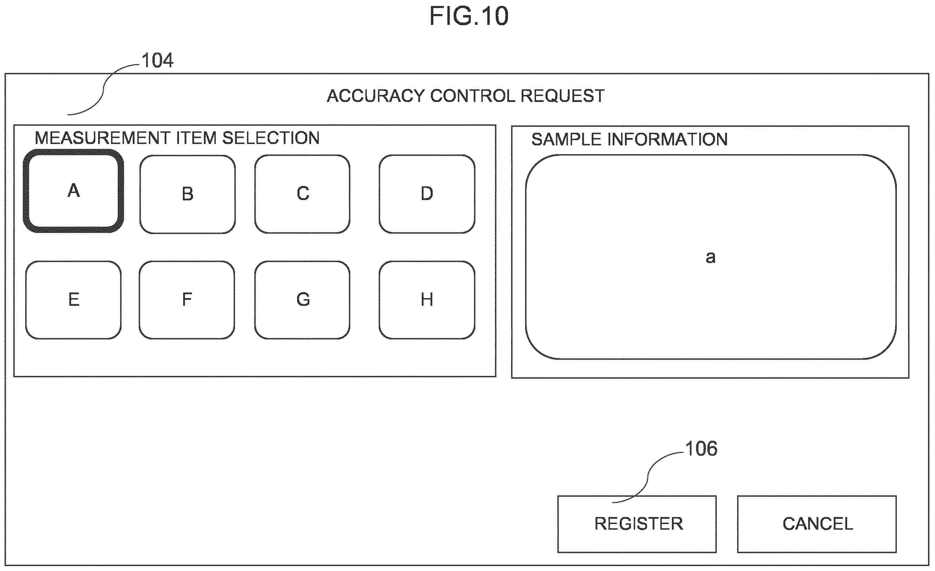

When the user makes an input to the accuracy control measurement request button 98 in a state where the reagent recognition mark 92 is selected, as illustrated in Fig. 10, an accuracy control measurement setting screen 104 related to the accuracy control measurement of the reagent corresponding to the reagent recognition mark 92 is displayed on the reagent information display screen 91.

On the accuracy control measurement setting screen 104, the measurement item in which the reagent corresponding to the reagent recognition mark 92 is used is highlighted, and information regarding the control sample necessary for the accuracy control measurement regarding the measurement item is automatically displayed.

Specifically, the accuracy control measurement setting screen 104 includes, as information regarding the control sample, the position where the control sample is disposed in the coagulation reaction table 50, the sample name of the control sample, the sample lot of the control sample, and the type of the container of the control sample.

Then, the user places the control sample at a predetermined position designated on the accuracy control measurement setting screen 104, and when the user makes an input to the registration button 106, the accuracy control measurement setting screen 104 is closed. In this state, when the user makes an input to the start button 102, the accuracy control measurement is started.

### Operations and effects of present embodiment

Next, operations and effects of the present embodiment will be described.

In the present embodiment, as illustrated in Figs. 2 and 3, a reagent cooling storage 60 is provided, and a plurality of reagents used for analysis of a specimen is arranged in the reagent cooling storage 60.

Meanwhile, a configuration is also conceivable in which, at the time of specimen processing, work related to specimen processing is performed by automatically operating various devices after various setting inputs are performed by a user.

However, with such a configuration, the user cannot grasp information regarding the reagent at the time of setting input. Thus, for example, in a case in which the effective period of the reagent has expired, it is conceivable that the user needs to perform setting input again after replacing the reagent, or the specimen processing is performed with the reagent whose effective period has expired.

Here, in the present embodiment, as illustrated in Fig. 5, reagent information regarding a reagent including position information of the reagent is stored for each reagent in the reagent information database 72. Then, as illustrated in Fig. 8, the display control unit 90 causes the reagent information display screen 91 to be displayed on the touch display 82 of the terminal 14, the reagent information display screen 91 including the reagent recognition mark display region 91A that displays the reagent recognition mark 92 corresponding to the reagent so as to correspond to the arrangement position of the reagent arranged in the reagent cooling storage 60 based on the position information of the reagent included in the reagent information.

The display control unit 90 causes, when at least one reagent recognition mark 92 is selected on the reagent information display screen 91 based on the operation input by the user, the reagent information of the reagent corresponding to the reagent recognition mark 92 to be displayed on the reagent information display screen 91.

Thus, in the present embodiment, when the user selects a reagent to be used for specimen processing on the reagent information display screen 91, reagent information regarding the reagent is displayed on the reagent information display screen 91. As a result, in the present embodiment, it is possible to prevent the user from mistaking the reagent used for measuring the specimen.

Returning to Fig. 5, in the present embodiment, calibration setting information regarding setting of calibration of the reagent is stored in the calibration database 74.

As illustrated in Fig. 8, the display control unit 90 displays the calibration request button 96 on the reagent information display screen 91. As also illustrated in Fig. 9, when the calibration request button 96 is selected based on the operation input by the user in a state where at least one reagent recognition mark 92 is selected on the reagent information display screen 91 of the touch display 82 based on the operation input by the user, the display control unit 90 causes a calibration setting screen 99 for displaying calibration setting information of a reagent corresponding to the reagent recognition mark 92 to be displayed on the touch display 82.

Thus, in the present embodiment, when the user selects the reagent for calibration on the reagent information display screen 91 and then selects the calibration request button 96, the calibration setting screen 99 is displayed on the touch display 82 in a state where the measurement item to use the reagent selected on the reagent information display screen 91 is selected, for example, highlighted and the sample information to be used for calibration is displayed, and the user can register the calibration setting after confirming the calibration setting information of the reagent.

That is, in the present embodiment, it is not necessary to reselect a measurement item to use a reagent or a sample to be used for calibration on the calibration setting screen 99 in a state where the reagent information checked on the reagent information display screen 91 by the user is stored. As a result, in the present embodiment, in the calibration, the work load of the user can be reduced, and the user can be prevented from performing erroneous processing.

In the present embodiment, since the calibration setting screen 99 is displayed in a state where the measurement item to use the reagent selected on the reagent information display screen 91 and the sample to be used for calibration are selected, the user can determine the priority order of the calibration after confirming the content of the calibration.

Returning to Fig. 5, in the present embodiment, accuracy control measurement setting information regarding the setting of the accuracy control measurement of the reagent is stored in the accuracy control measurement information database 76.

As illustrated in Fig. 8, the display control unit 90 displays the accuracy control measurement request button 98 on the reagent information display screen 91. As illustrated in Fig. 10, when the accuracy control measurement request button 98 is selected based on the operation input by the user in a state where at least one reagent recognition mark 92 is selected on the reagent information display screen 91 of the touch display 82 based on the operation input by the user, the display control unit 90 causes the accuracy control measurement setting screen 104 to be displayed on the touch display 82, the accuracy control measurement setting screen 104 displaying the accuracy control measurement setting information of the reagent corresponding to the reagent recognition mark 92.

Thus, in the present embodiment, when the user selects the reagent to be used for the accuracy control measurement on the reagent information display screen 91 and then selects the accuracy control measurement request button 98, the accuracy control measurement setting screen 104 is displayed on the touch display 82, and the user can register the setting of the accuracy control measurement after confirming the accuracy control measurement setting information of the reagent.

That is, in the present embodiment, it is not necessary to select a measurement item to use a reagent or a sample to be used for accuracy control measurement on the accuracy control measurement setting screen 104 in a state where the reagent information checked on the reagent information display screen 91 by the user is stored. As a result, in the present embodiment, in the accuracy control measurement, the work load of the user is reduced, and the user can be prevented from performing erroneous processing.

In the present embodiment, since the accuracy control measurement setting screen 104 is displayed in a state where the measurement item to use the reagent selected on the reagent information display screen 91 and the sample to be used for accuracy control are selected, the user can determine the priority order of the accuracy control measurement after confirming the content of the accuracy control measurement.

In the present embodiment, when the user performs a predetermined operation on the reagent information display screen 91 and the accuracy control measurement setting screen 104, the accuracy control measurement of a reagent not used for the specimen can be performed at any timing. Then, measurement results of the accuracy control measurement related to the control sample used for the accuracy control measurement of the reagent can be accumulated in the accuracy control measurement information database 76. As a result, whether or not the control sample can be used can be determined based on the data accumulated in the accuracy control measurement information database 76.

As described above, the specimen processing system 10 according to the present embodiment enables a user to grasp information regarding a reagent at the time of setting input regarding specimen processing by the user.

In a case in which the user performs calibration measurement and accuracy control measurement on the selected reagent after grasping the information regarding the reagent, the work load of the user can be reduced.

### <Supplementary description of above embodiment>

(1) In the embodiment described above, the reagent information display screen 91 and the like are displayed on the touch display 82 of the terminal 14, but a configuration may be employed in which a touch display similar to the touch display 82 is provided in the specimen processing apparatus 12. The reagent information display screen 91 or the like may be displayed on a monitor of a computer communicable with the specimen processing apparatus 12.
(2) In the embodiment described above, a seal (not illustrated) on which an identifier indicating various types of information is printed is attached to the specimen container 28 or the like, but the present invention is not limited thereto. For example, a configuration may be employed in which an RF tag in which various types of information are stored, that is, a radio frequency tag is provided in the specimen container 28 or the like, and electronic information of the RF tag is read and electronic information is written in the RF tag by a reader/writer provided in the specimen processing apparatus 12.

## Claims

1. A specimen processing system comprising:
a reagent arrangement unit in which a plurality of reagents used for analysis of a specimen is arranged;
a reagent information storage unit that stores, for each of the reagents, reagent information regarding the reagent including position information of the reagent; and
a display control unit that causes a display unit to display the reagent information,
wherein the display control unit:
causes the display unit to display a reagent information display screen including a reagent recognition mark display region that displays a reagent recognition mark corresponding to the reagent so as to correspond to an arrangement position of the reagent arranged in the reagent arrangement unit based on the position information, and
when at least one of the reagent recognition marks is selected on the reagent information display screen based on an operation input by a user, causes the reagent information of the reagent corresponding to the reagent recognition mark to be displayed on the reagent information display screen.

2. The specimen processing system according to claim 1, wherein:
the reagent information storage unit stores calibration setting information regarding setting of calibration of the reagent; and
the display control unit:
causes a calibration request button to be displayed on the reagent information display screen, and
causes the display unit to display a calibration setting screen that displays the calibration setting information of the reagent corresponding to the reagent recognition mark when the calibration request button is selected based on the operation input in a state in which at least one of the reagent recognition marks is selected on the reagent information display screen based on the operation input.

3. The specimen processing system according to claim 1 or 2, wherein:
the reagent information storage unit stores accuracy control measurement setting information regarding setting of accuracy control measurement of the reagent; and
the display control unit:
causes an accuracy control measurement request button to be displayed on the reagent information display screen, and
causes an accuracy control measurement setting screen to be displayed, the accuracy control measurement setting screen displaying the accuracy control measurement setting information of the reagent corresponding to the reagent recognition mark when the accuracy control measurement request button is selected based on the operation input in a state in which at least one of the reagent recognition marks is selected on the reagent information display screen based on the operation input.
